# EUROPÄISCHE PATENTSCHRIFT

(11) **EP 4 143 264 B1**
(45) Veröffentlichungstag und Bekanntmachung des Hinweises auf die Patenterteilung: **01.05.2024**
(21) Anmeldenummer: 21717916.7
(22) Anmeldetag: 15.04.2021
(51) Int. Cl.: C09D 5/18, C09K 21/14, E04B 1/94

(54) **INTUMESZENZ-BESCHICHTUNG MIT VERBESSERTER KALTFLEXIBILITÄT**
INTUMESCENT COATING WITH IMPROVED COLD FLEXIBILITY
REVÊTEMENT INTUMESCENT À FLEXIBILITÉ À FROID AMÉLIORÉE

(30) Priorität: 30.04.2020 EP 20172245
(43) Veröffentlichungstag der Anmeldung: 08.03.2023
(73) Patentinhaber: Röhm GmbH, 64295 Darmstadt (DE)
(72) Erfinder: KLEIN, Alexander, 55435 Gau-Algesheim (DE); LOTZ, Janos, 63571 Gelnhausen (DE)
(74) Vertreter: Röhm Patent Association
(86) Internationale Anmeldenummer: PCT/EP2021/059787
(87) Internationale Veröffentlichungsnummer: WO 2021/219394

(56) Entgegenhaltungen:
- EP-A1- 1 833 899
- EP-A1- 2 154 191
- DE-A1-102006 056 403

## Beschreibung

### Gebiet der Erfindung

Die vorliegende Erfindung betrifft ein neuartiges Reaktionssystem zur Intumeszenz-Beschichtung. Intumeszenz-Beschichtungen werden insbesondere zum Brandschutz von metallischen Bauteilen, wie Trägern im Hochbau eingesetzt. Dabei werden diese Beschichtungen in einem Brandfall reaktiv aufgeschäumt und bilden so eine feuerfeste Isolierschicht mit geringer Wärmeleitfähigkeit auf dem Metallträger und verzögert durch die damit entstehende Isolierung ein frühzeitiges, thermisch induziertes Versagen dieses Bauteils.

Die vorliegende Erfindung betrifft dabei insbesondere Harzsysteme mit verbesserter Kälteflexibilität, die unter Vermeidung der sonst in Harzsystemen üblichen Polymerkomponenten gute Metallhaftung und Stoßfestigkeit auch bei niedrigen Temperaturen gewährleisten.

### Stand der Technik

Eine erste Generation der Intumeszenz-Beschichtungssysteme basierte auf hochmolekularen thermoplastischen Harzen auf Basis von (Meth)acrylaten und/oder Vinylmonomeren und benötigte einen hohen Lösemittel- oder Wasseranteil zur Aufbringung auf Metalloberflächen. Durch den hohen Lösungsmittelanteil, wobei auch wässrige Systeme beschrieben sind, benötigen diese Systeme entsprechend lange Trocknungszeiten.

Üblicherweise werden Intumeszenz-Beschichtung on-site während der Konstruktionsphase aufgetragen. Bevorzugt wären jedoch off-site Auftragungen vor der Anlieferung an die Baustelle, da diese unter kontrollierten Bedingungen erfolgen können. Eine langsame Trocknung führt jedoch zu einer unwirtschaftlichen, ineffizienten Bearbeitungsdauer. Die langen Bearbeitungszeiten kommen dabei insbesondere zum Tragen, da das Harz nacheinander von verschiedenen Seiten aufgetragen und jeweils getrocknet werden muss, um eine vollständige Beschichtung zu erhalten.

Epoxybasierte Intumeszenz-Beschichtungen werden vorzugsweise in der off-shore Industrie verwendet. Sie zeichnen sich durch gute Alterungsbeständigkeit und relativ kurze Trocknungszeiten aus. Auch Polyurethan-Systeme wurden intensiv untersucht. Sie zeichnen sich ebenfalls durch eine relativ kurze Trocknungszeit und eine gute Wasserbeständigkeit aus. Allerdings fielen hier die Feuertests negativ aus, da die Beschichtung keine gute Haftung auf Stahl aufweist. Details dazu können in Development of alternative technologies for off-site applied intumescent, Longdon, P. J., European Commission, [Report] EUR (2005), EUR 21216, 1-141 nachgelesen werden.

Eine weitere Generation von Intumeszenz-Beschichtungen basiert auf (Meth)acrylat-Reaktionsharzen. Der Auftrag dieser hat den großen Vorteil, dass hier keine Lösungsmittel benötigt werden, sondern das Harz nach der Applikation im Vergleich relativ schnell aushärtet. So erhält man nicht nur eine schnellere Verarbeitung, sondern insbesondere auch einen geringeren Anteil an verbleibenden flüchtigen Bestandteilen in der aufgetragenen Beschichtung. Solche Intumeszenz-Beschichtungssysteme sind erstmals in EP 1 636 318 offenbart.

Eine weitere Verbesserung der (Meth)acrylat-basierten Systeme ist beispielsweise in EP 2 171 004 offenbart. Dieses zeichnet sich durch einen besonders hohen Anteil an Säuregruppen zur Verbesserung der Metallhaftung aus.

In EP 2 171 005 ist eine Weiterentwicklung zu einem solchen System offenbart. Diese zeichnet sich insbesondere durch Copolymerisation von di-Säuren oder copolymerisierbaren Säuren mit Spacergruppe aus. Dadurch kann die Metallhaftung zusätzlich verbessert werden.

Allen diese Systeme unterliegen jedoch weiter einem Verbesserungsbedarf. So sind die Freiheitsgrade hinsichtlich der Formulierbarkeit stark eingeschränkt. Auch können ausschließlich relativ dicke Schichten aufgetragen werden. In der Kombination ergibt sich aus diesen Nachteilen z.B. auch, dass die Schaumhöhe im Bedarfs-, bzw. Brandfall nur in einem geringen Maß voreinstellen kann.

Darüber hinaus ergeben sich auch Nachteile aus dem relativ komplexen Herstellungsverfahren der Harze. Alle ansonsten sehr vorteilhaften, im Stand der Technik beschriebenen (Meth)acrylat-Systemen ist gemein, dass hier das im Harz enthaltene feste, thermoplastische Polymer erst diskret hergestellt, dann in den Monomerkomponenten aufgelöst und mit Additiven vorformuliert werden und schließlich kurz vor der Applikation als 2K-System schlussformuliert wird. Diese Prozesskette ist relativ aufwendig und es besteht ein großes Interesse an einer Vereinfachung.

In der Europäischen Patentanmeldung mit der Anmeldenummer 20162308.9 werden Harzsysteme, die mittels eines neuartigen Verfahrens hergestellt werden, offenbart. In diesem Verfahren wird eine Monomermischung bis zu einem maximalen Polymerisationsgrad von 70% polymerisiert. Dabei beträgt die Glasübergangstemperatur der dabei gebildeten Methacrylat-basierten polymeren Komponente -20 °C bis 23 °C und ist somit deutlich geringer als im vorgenannten Stand der Technik beschrieben. Dennoch bleibt die Kälteflexibilität dieser Systeme, insbesondere bei Verwendung von ausschließlich (Meth-)acrylatpolymerkomponenten, beschränkt.

Die EP 2 154 191 A1 beschreibt eine flammenhemmende Zusammensetzung, die zwischen zwei transparente Platten eingebracht wird, um darin flammenhemmende Eigenschaften, Schlagfestigkeit und eine gute Verbindung zwischen den Platten zu erzielen. Die flammenhemmende Zusammensetzung enthält keine Komponente, die als Treibmittel fungiert.

Die WO 2006/055377 A1 beschreibt eine Polymerzusammensetzung, die flammenhemmende Eigenschaften aufweist.

Die DE 10 2006 056 403 A1 beschreibt eine Intumeszierende Mehrkomponente-Epoxidharz-Beschichtungsmasse für den Brandschutz, die ein Epoxidharz sowie eine Härterkomponente enthält.

### Aufgabe

Der vorliegenden Erfindung lag im Hinblick auf den Stand der Technik die Aufgabe zugrunde, ein besonders kälteflexibles Reaktionsharzsystem zur Herstellung von (Meth)acrylat-basierten Intumeszenz-Beschichtungen mit verbesserter Stoßfestigkeit und off-side Applizierbarkeit bereitzustellen.

Dabei bestand der Bedarf an einem vereinfachten Herstellverfahren für ein Reaktionsharzsystem für Intumeszenz-Beschichtungen, bei dem gegenüber dem Stand der Technik auf die energetisch aufwendige Einbringung einer festen (Meth)acrylatpolymerkomponente verzichtet werden kann.

Weiterhin bestand die Aufgaben eine neuartige Formulierung zur 2K-Intumeszenz-Beschichtung zur Verfügung zu stellen, die neben einer sehr guten Metallhaftung und einer einfachen Verarbeitbarkeit, zusätzlich Freiheitsgrade bezüglich der Additiverung und der Einstellung einer späteren Schäumungskontrolle, insbesondere in Hinblick auf die Voreinstellung späterer Schaumhöhen und Schaumqualität, wie z.B. ein besonders hoher Anteil an geschlossen porigem Schaum, zulässt.

Weitere nicht explizit aufgeführte Aufgaben können sich im Folgenden aus der Beschreibung oder den Beispielen, sowie aus dem Gesamtzusammenhang der Erfindung ergeben.

### Lösung

Gelöst werden diese Aufgaben mittels einer neuartigen Intumeszenzformulierung, bzw. eines Reaktionsharzsystems für solche Intumeszenzformulierungen und den mittels diesen hergestellten Beschichtungen. Insbesondere betrifft die Erfindung flüssige, aufschäumbare Intumeszenzformulierung, welche ein Harzsystem umfassen, wobei dieses Harzsystem dadurch gekennzeichnet ist, dass es mindestens ein erstes Polymer mit einem stoffmittleren Molekulargewicht Mₙ zwischen 1500 und 35 000 g/mol und einer Glasübergangstemperatur kleiner 15 °C, mindestens ein vinylisches Monomer und mindestens eine Komponente, die bei einer Temperatur oberhalb von 200 °C als Treibmittel fungiert, aufweist. Dabei ist eine Beschichtung hergestellt aus dieser Intumeszenzformulierungen durch Polymerisation härtbar. Weiterhin ist die erfindungsgemäße Intumeszenzformulierungen dadurch gekennzeichnet, dass diese vor der Initiierung dieser Polymerisation keine Komponente mit Säurefunktion und gleichzeitig einem Molekulargewicht größer 1500 g/mol aufweist.

Bevorzugt weißt dieses erste Polymer eine mit vinylischen Monomeren copolymerisierbare Funktionalität auf. Mittels dieser Funktionalität wird die Polymerkette beim Aushärten des Reaktionsharzes in die vinylische bei der Polymerisation gebildete Polymerkette eingebaut. Dabei kann das erste polymer auch mehr als eine dieser copolymerisierbaren vinylischen Funktionalitäten pro Kette aufweisen. Bevorzugt weisen die Ketten dabei mehr als 2, besonders bevorzugt mehr als 2,1 und insbesondere bevorzugt mehr als 2,3 dieser Funktionalitäten pro Kette auf. Umso größer der Anteil dieser Funktionalitäten pro Kette ist, umso höher ist der Vernetzungsgrad in der ausgehärteten Intumeszenzbeschichtung, was bei einem hohen Vernetzungsgrad insbesondere die Härte erhöht. Dass gleichzeitig auch die Sprödigkeit der Beschichtung mit steigendem Vernetzungsgrad erhöh werden kann, kann durch eine geeignete Wahl der Polymere und insbesondere der Monomere entgegengewirkt werden.

Besonders bevorzugt handelt es sich bei dem ersten Polymer um ein flüssiges Urethan(meth)acrylat, ein flüssiges Epoxy(meth)acrylat, ein flüssiges Polyether(meth)acrylat, ein flüssiges Polyester(meth)acrylat oder um Mischungen aus diesen. Besonders bevorzugt handelt es sich um ein flüssiges Urethan(meth)acrylat. Ein kommerziell erhältliches Beispiel für Urethanacrylat hergestellt aus Polyolen, Isocyanaten und hydroxyfunktionellen Acrylaten ist EBECRYL 230 der Firma Allnex.

Es können handelsübliche flüssige Polymere und Mischungen derselben, mit (Meth)acrylatbasierten Reaktivverdünnern, wie z. B. Methylmethacrylat eingesetzt werden.

Alternativ können die flüssigen Polymere zum Beispiel durch Umsetzung von Isocyanaten mit Hydroxyalkyl(meth)acrylaten und makromolekularen Polyolen in einer ersten Stufe, z.B. in einem Rührkessel hergestellt werden, ehe weitere Komponenten des Reaktionsharzes in einer zweiten Stufe eingemischt werden. Diesen Ansatz kann man als in-situ Verfahren bezeichnen.

Erfindungsgemäß versteht man unter der Bezeichnung flüssiges Polymer ein Polymer mit einem stoffmittleren Molekulargewicht Mₙ zwischen 1000 und 35000 g/mol, bevorzugt zwischen 1500 und 20 000 g/mol, besonders bevorzugt zwischen 1500 und 10 000 g/mol. Weiterhin weist dieses flüssige Polymer eine Glasübergangstemperatur kleiner 15 °C, bevorzugt kleiner 10 °C, besonders bevorzugt kleiner 0 °C auf.

Flüssiges Polymer heißt in diesem Zusammenhang nicht zwangsläufig dünnflüssig oder sogar fließfähig. Vielmehr ist es bevorzugt, dass dieses erste Polymer, enthalten in dem Reaktionsharz der Intumeszenzformulierung, bei Raumtemperatur von 23 °C nach DIN EN ISO 2555 mit einem Rotationsviskosimeter (Brookfield Typ DV2T) eine dynamische Viskosität kleiner 250 000 mPas, bevorzugt kleiner 100 000 mPas aufweist.

Erfindungsgemäß ist bei der Auswahl der flüssigen Polymere darauf zu achten, dass diese dem Reaktionsharzsystem eine ausreichende Tieftemperaturflexibilität verleihen. Besonders bevorzugt werden daher Urethan(meth)acrylate eingesetzt. Die flüssigen Polymere sollen deshalb eine Glastransaktionstemperatur (Tg) von -80 °C bis 15 °C, vorzugsweise von -70 °C bis 0 °C und besonders bevorzugt von -60 °C bis -20 °C aufweisen. Es ist bevorzugt, dass das flüssige Polymer durchschnittlich zwei oder mehr (Meth)acrylatgruppen in einem Molekül aufweist. Wenn die Anzahl der Gruppen weniger als 2 beträgt, würde die Beschichtung schlechte physikalische mechanische Eigenschaften, aber auch Lösungsmittelbeständigkeit und Kratzfestigkeit aufweisen.

Bei den vinylischen Monomeren in dem Harzsystem wiederum handelt es sich bevorzugt um ein (Meth)acrylate und/oder um eine Mischung aus verschiedenen (Meth)acrylaten und/oder mit (Meth)acrylaten co-polymerisierbaren Monomeren. Beispiele für solche copolymerisierbaren Monomere sind Styrol, Itacon- oder Maleinsäure.

Besonders bevorzugt handelt es sich bei den vinylischen Monomere um (Methyl)methacrylat, (Ethyl)methacrylat, n-Butyl(meth)acrylat, Isobutyl(meth)acrylat, t-Butyl(meth)acrylat, 2-Ethylhexyl(meth)acrylat, Styrol oder um eine Kombination aus einem oder mehreren dieser Monomere.

Bei den (Meth)acrylatmonomeren kann es sich beispielsweise insbesondere um Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, handeln. Als Bestandteile von Monomergemischen eignen sich auch zusätzliche Monomere mit einer weiteren funktionellen Gruppe, wie Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Bei in der Intumeszenzzusammensetzung sehr bevorzugt enthaltenden Haftvermittlern handelt es sich um silanfunktionelle (Meth)acrylate wie 3-Methacryloxypropyltrimethoxysilan, silanfunktionelle Vinylverbindungen, wie beispielsweise Vinyltrimethoxysilan oder bevorzugt um säurefunktionelle Monomere, wie beispielsweise Acrylsäure, Methacrylsäure, 2-Methacryloyloxyethylphosphat, Bis-(2-methacryloxyoxyethyl)phosphat, 2-Acryloyloxyethylphosphat, Bis-(2-acryloyloxyethyl)phosphat, 2-Methacryloyloxethylmaleat, Acryloyloxethylmaleat, Itaconsäure und/oder 2-Carboxy-ethylacrylat, besonders bevorzugt um 2-Carboxyethylacrylat. Andere Beispiele sind je nach Zusammensetzung Maleinsäure, welches zur Copolymerisation zwingend Styrol in der Monomermischung benötigt. Bevorzugt werden 0,2 Gew% bis 10 Gew%, besonders bevorzugt 0,4 Gew% bis 4 Gew% Haftvermittler in der Harzzusammensetzung eingesetzt.

Darüber hinaus sind auch Kombinationen aus zwei oder mehreren diese Haftvermittler möglich.

Methylmethacrylat ist aufgrund seiner Fähigkeit, niederviskose Lösungen zu erzeugen der besonders bevorzugte Methacrylsäureester. Allerdings können seine hohe Flüchtigkeit und sein charakteristischer Geruch für bestimmte Anwendungen bedeuten, dass alternative (Meth)acrylsäureester bevorzugt sein können.

Bevorzugt enthält die Intumeszenzformulierung zwischen 20 Gew% und 60 Gew% des Harzsystems. Genauso bevorzugt weist dieses Harzsystem in der Intumeszenzformulierung zwischen 5 Gew% und 65 Gew%, bevorzugt zwischen 20 und 55 Gew% des ersten flüssigen Polymers und/oder zwischen 30 Gew% und 90 Gew%, bevorzugt zwischen 40 und 75 Gew% der vinylischen Monomere auf.

Unabhängig von der Zusammensetzung des Reaktionsharzes enthält die Intumeszenzformulierung bevorzugt zwischen 35 und 60 Gew%, besonders bevorzugt zwischen 40 und 50 Gew% des Treibmittels.

Bezüglich der Treibmittel gibt es verschiedene Alternativen. In einer besonders bevorzugten Alternative können Polyphosphate eingesetzt werden, die sich bei 190 bis 300 °C zu Phosphorsäure umsetzen. Zusätzlich enthält die Formulierung Pentaerythritol, welches darauf bei über 300 °C in Anwesenheit der Phosphorsäure unter Abspaltung von Wasser und Kohlendioxid einen Kohlenstoffschaum bildet. Wasser und Kohlendioxid wirken dabei als Treibmittel. Ein zusätzlicher Vorteil dieser Alternative ist dabei, dass die Polyphosphate, wie auch die Phosphorsäure als zusätzliches Flammschutzmittel wirken.

In einer zweiten Alternative wird Melamin eingesetzt, welches bei über 350 °C zu Ammoniak, Stickstoff und Kohlendioxid zersetzt wird, welche alle drei dabei als Treibmittel wirken. Durch eine Kombination dieser beiden Alternativen, lassen sich zusätzlich weitere Vorteile neben der Flammschutzwirkung realisieren. So kann der Schäumungsgrad feiner eingestellt werden. Auch kommt es zu einem stufenweisen Schäumen, was wiederum Vorteile bezüglich der Schaumstabilität bewirkt.

Die Herstellung des Reaktionsharzes erfolgt in einfacher Weise durch Vermischen der vorgenannten flüssigen Komponenten, typischerweise in Rührkesseln im Batchmischverfahren.

Beispielhafte erfindungsgemäße Formulierungen können wie folgt aussehen:
Eine solche Formulierung zur 2K-Intumeszenz-Beschichtung kann zu einem Zeitpunkt nach Mischen des 2K-Systems 30 bis 50 Gew% des mittels dem erfindungsgemäßen Verfahren hergestellten Reaktionsharzes, 35 bis 60 Gew% eines Treibmittels, 0,1 bis 2,5 Gew% eines Peroxids und/oder Azoinitiators, bevorzugt nur Peroxide wie zum Beispiel Benzoylperoxid, optional bis zu 2 Gew% eines Beschleunigers, optional 4,9 bis 15 Gew% Additive und 5 bis 30 Gew% Füllstoffe aufweist. Optional kann die Formulierung zusätzliche Pigmente aufweisen.

Das Initiatorsystem besteht in der Regel aus einem oder mehreren Peroxiden und/oder Azoinitiatoren, bevorzugt einem Peroxid, und aus einem Beschleuniger, in der Regel ein oder mehrere tertiäre Amine, insbesondere einem aromatischen tertiären Amin. Ein besonders geeignetes Beispiel für einen solchen Initiator ist Dlibenzoylperoxid, welches z.B. auch als sichere, vorformulierte Paste eingesetzt werden kann, wobei die Hilfsstoffe dieser Paste, wie z.B. Paraffine, in den entsprechenden Konzentrationen in der Formulierung nicht stören. Beispiele für die Beschleuniger sind insbesondere N,N-di-Alkyl-para-toulidine, wie beispielsweise N,N-bis-(2-Hydroxypropyl)-para-toluidin oder N,N-di-Methyl-para-toluidin oder N,N-di-Methylanilin.

Neben den genannten Bestandteilen, können die Intumeszenzzusammensetzungen bzw. das darin enthaltene Reaktionsharz weitere optionale Bestandteile aufweisen.

Ein optionaler Bestandteil des Reaktionsharzes sind monomere Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat. Diese monomeren Vernetzer können neben vernetzenden flüssigen Polymeren, wie oben beschrieben, vorliegen.

Bei optional in der Intumeszenzzusammensetzung oder bereits im Reaktionsharz enthaltenden Additiven kann es sich insbesondere um Netzmittel, Filmbildner, Entlüftungsreagenzien und/oder Dispergierhilfsmittel handeln. Bei optionalen Füllstoffen kann es sich beispielsweise um Siliziumdioxid, Titandioxid, Quarz oder andere, vor allem thermisch stabile anorganische Verbindungen handeln. Anorganische Füllstoffe wie Carbonate, die sich thermisch zersetzen können, dürfen nur in einem geringeren Maß eingesetzt werden, um ein unkontrolliertes zusätzliches Schäumen der Beschichtung im Brandfall zu vermeiden. Ein besonders bevorzugter Füllstoff ist Titandioxid.

Bei den optional zur schnelleren Härtung als Kaltplastik eingesetzten Beschleunigern handelt es sich in der Regel um tertiäre aromatische Amine.

Neben der neuartigen Intumeszenzformulierung ist auch ein Verfahren zur Härtung dieser flüssigen aufschäumenden Intumeszenzformulierung Bestandteil der vorliegenden Erfindung.

In diesem erfindungsgemäßen Verfahren wird der Intumeszenzformulierung ein Initiator oder eine Komponente eines Initiatorsystems zugeführt und darauf innerhalb von 20 min auf ein Substrat appliziert und innerhalb weiterer 120 min nach der Applizierung ausgehärtet.

In einem alternativen erfindungsgemäßen Verfahren handelt es sich bei der härtenden Überzugszusammensetzung um ein 2K-System. Hier werden die beiden Teilzusammensetzungen des 2K-Systems miteinander vermischt, darauf innerhalb von 20 min auf ein Substrat appliziert wird und innerhalb weiterer 120 min nach der Applizierung aushärtet.

Die Formulierung der eigentlichen Beschichtungszusammensetzung dieser zweiten Alternative kann wie folgt erfolgen: das Reaktionsharz wird mit den Treibmitteln, Additiven, optionalen Füllstoffen und weiteren optionalen Füllstoffen formuliert. Darauf erfolgt eine Aufteilung dieser Zwischenformulierungen in zwei z.B. gleichgroße Fraktionen. Eine dieser Fraktionen wird dann zusätzlich mit dem Beschleuniger vermischt. Diese beiden Fraktionen sind daraufhin auch für längere Zeit lagerstabil.

Vor der eigentlichen Applikation wird dann die Beschleuniger-freie Fraktion mit dem Initiator oder Initiatorgemisch versetzt. Nach längerer Lagerung oder Transport kann es vorher nötig sein, beide Fraktionen noch einmal aufzurühren, da sich z.B. Füllstoffe abgesetzt haben können. Nach dem Einrühren bzw. anderswertigen Einmischen des Initiators werden dann beide Fraktionen des 2K-Systems miteinander vermischt. Dabei wird die Polymerisation der monomeren Bestandteile des Reaktionsharzes gestartet und es beginnt die so genannte Topfzeit, innerhalb derer die Applikation auf dem Substrat, also z.B. einem Stahlträger, erfolgen muss. Bei modernen Applikationsvorrichtungen kann die Mischung der beiden Fraktionen des 2K-Systems auch in einer Mischkammer einer Applikationsdüse direkt vor dem mit Druck indiziertem Aufsprühen erfolgen. Die Topfzeiten ergeben sich aus einer Kombination aus Art und Konzentration von Initiator und Beschleuniger, der Monomerzusammensetzung und äußeren Einflussfaktoren, wie z.B. die Umgebungstemperatur. Diese Faktoren lassen sich für den Fachmann einfach abschätzen und einstellen. In der Regel wird mit mehrminütigen bis zu mehrstündigen Topfzeiten, die auch die 20 Stunden Marke überschreiten können, gearbeitet. Bevorzugt sind jedoch deutlich kürzere Topfzeiten, die zu den bevorzugten, oben angegeben Verfahrenszeiten passen. Eine solche Topfzeit läge beispielsweise zwischen 3 - 30 min, wobei bei vollautomatischer Auftragung mit Spritzmaschinen Topfzeiten von unter 10 min gearbeitet werden kann.

Bevorzugt handelt es sich in einer der beiden Alternativen des Verfahrens bei dem Initiator, einer Komponente des Initiatorsystems oder einem Bestandteil in einer Komponente eines 2K-Systems um ein organisches Peroxid handelt. Besonders bevorzugt handelt es sich bei diesem organischen Peroxid um ein Diacyl-Peroxyd, ein Keton-Peroxyd, einen Peroxyester, ein Dialkyl-Peroxyd, ein Hydroperoxyd, wie z.B. Cumolhydroperoxid, ein Peroxyketal oder um eine Kombination dieser.

Weiterhin ist - wie bereits ausgeführt - ein Verfahren zur Intumeszenz-Beschichtung einer Metalloberfläche Gegenstand der vorliegenden Erfindung. In diesem Verfahren wird die zuvor beschriebene Formulierung zur 2K-Intumeszenz-Beschichtung hergestellt, binnen 1 bis 20 Minuten auf die Metalloberfläche aufgetragen und dort innerhalb von 120 min, bevorzugt innerhalb von 60 min bei einer Temperatur zwischen 0 und 30 °C, bevorzugt zwischen 17 °C und 23 °C ausgehärtet. Die bevorzugte Schichtdicke der nicht geschäumten Beschichtung beträgt dabei 1 bis 20 mm, bevorzugt 2,5 bis 7,5 mm. Dies wäre dabei derart formuliert, dass die Beschichtung in einem Brandfall bevorzugt zu einer Schichtdicke des Schaums von 20 bis 100 mm, bevorzugt 30 bis 50 mm führen würde.

Besonders bevorzugt beträgt während des Mischens, Applizierens auf dem Substrat und Aushärtens der Gesamtgewichtsverlust der Intumeszenzformulierung durch Verdampfung weniger als 5 Gew%. Dies kann durch eine entsprechend geeignete Formulierung, insbesondere in Hinblick auf die Auswahl der Monomere im Reaktionsharz sichergestellt werden.

### Beispiele

### Beispiel 1: Erfindungsgemäße Herstellung eines Reaktionsharz

DEGADUR MDP Membran SG ist ein von der Firma Röhm GmbH kommerziell erhältliches, beschleunigerfreies Reaktionsharz auf Methacrylatbasis mit Urethanmethacrylaten zur Flexibilisierung. DEGADUR MDP Membran SG enthält keine festen polymeren Komponenten. 970,0 g DEGADUR MDP Membran SG wurden mit 20,0 g 2-Carboxyethylacrylat und 10,0 g N,N-bis-(2-Hydroxypropyl)-para-toluidin versetzt und die Mischung wurde bei 50°C bis zum vollständigen lösen gerührt. Im Anschluss wurde das Reaktionsharz auf Raumtemperatur abgekühlt.

### Beispiel 2: Erfindungsgemäße Formulierung 1 einer Intumeszenzbeschichtung

### Zusammensetzung Formulierung 1 aus Beispiel 2

| | |
|---|---|
| Reaktionsharz aus Beispiel 1 | 40,0 Gew.% |
| Titandioxid | 10,0 Gew.% |
| Ammoniumpolyphosphat | 30,0 Gew.% |
| Pentaerythrit | 8,5 Gew.% |
| Melamin | 11,0 Gew.% |
| Byk D410 | 0,5 Gew.% |

Es versteht sich, dass die oben beschriebene Ausführungsform nur beispielshaft ist. Viele Modifikationen oder Variationen sind möglich.

### Vergleichsbeispiel 1: Nichterfindungsgemäße Formulierung 2 einer Intumeszenzbeschichtung

DEGALAN 1710 ist ein von der Firma Röhm GmbH produziertes , kommerziell erhältliches Reaktionsharz auf Meth(Acrylat)basis mit fester (Glasübergangstemperatur > 50 °C) thermoplastischer Polymerkomponente.

### Zusammensetzung Formulierung 2 aus Beispiel 3

| | |
|---|---|
| DEGALAN 1710 | 40,0 Gew.% |
| Titandioxid | 10,0 Gew.% |
| Ammoniumpolyphosphat | 30,0 Gew.% |
| Pentaerythrit | 8,5 Gew.% |
| Melamin | 11,0 Gew.% |
| Byk D410 | 0,5 Gew.% |

### Eigenschaften der Intumeszenzbeschichtungen

Bestimmung der Topf- und Härtezeit:
Zu jeweils 99 Gewichtsteilen der obigen Beispielformulierungen wurde unmittelbar vor dem Auftragen 1 Gewichtsteil Perkadox GB50-X (Dibenzoylperoxidpulver 50%, Firma Nouryon) eingemischt.

Die Formulierungen wurden danach jeweils mit einer Schichtstärke von 3000 µm auf Stahlplatten aufgebracht. An einen kleineren Teil der Probe wurde zusätzlich die Topfzeit und die Maximaltemperatur bei der Aushärtung gemessen. Die Topfzeit entspricht dabei derjenigen Zeitdauer nach Zugabe des Initiators, innerhalb der die Viskosität noch ausreichend gering für einen Auftrag der Beschichtung ist.

| | **Erfindungsgemäße Beispielformulierung 1** | **Nichterfindungsgemäße Formulierung 2** |
|---|---|---|
| Topfzeit | 10 min | 16 min |
| Zeitdauer bis Temperaturmaximum | 14 min | 34 min |
| Temperaturmaximum | 84 °C | 70 °C |
| Zeitdauer bis zur klebfreien Aushärtung | 19 min | 43 min |

### Bestimmung der Kälteflexibilität

Zu jeweils 99 Gewichtsteilen der obigen Beispielformulierungen wurde unmittelbar vor dem Auftragen 1 Gewichtsteil Perkadox GB50-X (Dibenzoylperoxidpulver 50%, Firma Nouryon) eingemischt. Die Formulierungen wurden danach jeweils mit einer Schichtstärke von 1000 µm auf 1 mm dickes Stahlblech aufgebracht.

Nach der vollständigen Aushärtung wurden die Platten auf -20°C gekühlt und bei dieser Temperatur die beschichteten Stahlbleche um 90° über eine rechtwinklige Kante umgebogen. Im Anschluss wurde die Beschichtung an der Biegestelle auf Risse und Abplatzungen untersucht.

| | **Erfindungsgemäße Beispielformulierung 1** | **Nichterfindungsgemäße Formulierung 2** |
|---|---|---|
| Kälteflexibilität der Beschichtung bei -20°C | Keine Abplatzungen oder Risse erkennbar. | Die Beschichtung zeigt deutliche Risse und Abplatzungen. |

Im Biegeversuch bei -20 °C zeigt die erfindungsgemäße Beispielformulierung 1 eine deutlich verbesserte Kälteflexibilität im Vergleich zu der nichterfindungsgemäßen Formulierung 2 nach dem Stand der Technik.

## Patentansprüche

1. Flüssige, aufschäumbare Intumeszenzformulierung umfassend ein Harzsystem, **dadurch gekennzeichnet, dass** das Harzsystem mindestens ein erstes Polymer mit einem stoffmittleren Molekulargewicht Mₙ zwischen 1000 und 35 000 g/mol und einer Glasübergangstemperatur kleiner 15 °C, mindestens ein vinylisches Monomer und mindestens eine Komponente, die bei einer Temperatur oberhalb von 200 °C als Treibmittel fungiert, aufweist, wobei eine Beschichtung hergestellt aus der Intumeszenzformulierung durch Polymerisation härtbar ist und vor der Initiierung dieser Polymerisation keine Komponente mit Säurefunktion und gleichzeitig einem Molekulargewicht größer 1500 g/mol aufweist.

2. Intumeszenzformulierung gemäß Anspruch 1, **dadurch gekennzeichnet, dass** das erste Polymer eine dynamische Viskosität kleiner 250 000 mPas und eine mit vinylischen Monomeren copolymerisierbare Funktionalität aufweist.

3. Intumeszenzformulierung gemäß Anspruch 2, **dadurch gekennzeichnet, dass** es sich bei dem ersten Polymer um ein flüssiges Urethan(meth)acrylat, ein flüssiges Epoxy(meth)acrylat, ein flüssiges Polyether(meth)acrylat, ein flüssiges Polyester(meth)acrylat oder um Mischungen aus diesen, bevorzugt um ein flüssiges Urethan(meth)acrylat handelt.

4. Intumeszenzformulierung gemäß mindestens einem der Ansprüche 1 bis 3, **dadurch gekennzeichnet, dass** es sich bei den vinylischen Monomeren in dem Harzsystem um ein (Meth)acrylate und/oder um eine Mischung aus verschiedenen (Meth)acrylaten und/oder mit (Meth)acrylaten co-polymerisierbaren Monomeren handelt.

5. Intumeszenzformulierung gemäß Anspruch 4, **dadurch gekennzeichnet, dass** die vinylischen Monomere ausgewählt sind aus (Methyl)methacrylat, (Ethyl)methacrylat, n-Butyl(meth)acrylat, Isobutyl(meth)acrylat, t-Butyl(meth)acrylat, 2-Ethylhexyl(meth)acrylat, Styrol und Kombinationen aus diesen Monomeren.

6. Intumeszenzformulierung gemäß mindestens einem der Ansprüche 1 bis 5, **dadurch gekennzeichnet, dass** Intumeszenzformulierung zwischen 20 Gew% und 60 Gew% Harzsystem enthält.

7. Intumeszenzformulierung gemäß mindestens einem der Ansprüche 1 bis 6, **dadurch gekennzeichnet, dass** das Harzsystem zwischen 5 Gew% und 65 Gew% des ersten flüssigen Polymers aufweist.

8. Intumeszenzformulierung gemäß mindestens einem der Ansprüche 1 bis 7, **dadurch gekennzeichnet, dass** das Harzsystem zwischen 30 Gew% und 90 Gew% vinylische Monomere aufweist.

9. Intumeszenzformulierung gemäß mindestens einem der Ansprüche 1 bis 8, **dadurch gekennzeichnet, dass** die Intumeszenzformulierung zwischen 35 und 60 Gew% des Treibmittels enthält.

10. Verfahren zur Härtung einer flüssigen aufschäumenden Intumeszenzformulierung gemäß einem der Ansprüche 1 bis 9, **dadurch gekennzeichnet, dass** der Intumeszenzformulierung ein Initiator oder eine Komponente eines Initiatorsystems zugeführt wird, oder dass es sich bei der härtenden Überzugszusammensetzung um ein 2K-System handelt und die beiden Teilzusammensetzungen des 2K-Systems miteinander vermischt werden, diese darauf innerhalb von 20 min auf ein Substrat appliziert wird und innerhalb weiterer 120 min aushärtet.

11. Verfahren gemäß Anspruch 10, **dadurch gekennzeichnet, dass** es sich bei dem Initiator, einer Komponente des Initiatorsystems oder einem Bestandteil in einer Komponente eines 2K-Systems um ein organisches Peroxid handelt.

12. Verfahren gemäß Anspruch 11, **dadurch gekennzeichnet, dass** es sich bei dem organischen Peroxid um ein Diacyl-Peroxyd, ein Keton-Peroxyd, einen Peroxyester, ein Dialkyl-Peroxyd, ein Hydroperoxyd, wie z.B. Cumolhydroperoxid, ein Peroxyketal oder um eine Kombination dieser handelt.

13. Verfahren gemäß mindestens einem der Ansprüche 10 bis 12, **dadurch gekennzeichnet, dass** die Intumeszenzformulierung in weniger als 60 Minuten bei einer Temperatur zwischen 17 °C und 23 °C gehärtet wird.

14. Verfahren gemäß Anspruch 13, **dadurch gekennzeichnet, dass** während des Mischens, Applizierens auf dem Substrat und Aushärtens der Gesamtgewichtsverlust der Intumeszenzformulierung durch Verdampfung kleiner 5 Gew% ist.

## Claims

1. Liquid, foamable intumescent formulation comprising a resin system, **characterized in that** the resin system comprises at least one first polymer having an average molecular weight Mₙ of between 1000 and 35 000 g/mol and a glass transition temperature of less than 15°C, at least one vinylic monomer, and at least one component that acts as a blowing agent at a temperature of above 200°C, wherein a coating produced from the intumescent formulation is curable by polymerization and, prior to initiation of said polymerization, comprises no component having an acid function and at the same time a molecular weight of greater than 1500 g/mol.

2. Intumescent formulation according to Claim 1, **characterized in that** the first polymer has a dynamic viscosity of less than 250 000 mPa·s and a functionality that is copolymerizable with vinylic monomers.

3. Intumescent formulation according to Claim 2, **characterized in that** the first polymer is a liquid urethane (meth)acrylate, a liquid epoxy (meth)acrylate, a liquid polyether (meth)acrylate, a liquid polyester (meth)acrylate or mixtures thereof, preferably a liquid urethane (meth)acrylate.

4. Intumescent formulation according to at least one of Claims 1 to 3, **characterized in that** the vinylic monomers in the resin system are a (meth)acrylate and/or a mixture of different (meth)acrylates and/or monomers copolymerizable with (meth)acrylates.

5. Intumescent formulation according to Claim 4, **characterized in that** the vinylic monomers are selected from (methyl) methacrylate, (ethyl) methacrylate, n-butyl (meth)acrylate, isobutyl (meth)acrylate, t-butyl (meth)acrylate, 2-ethylhexyl (meth)acrylate, styrene, and combinations of said monomers.

6. Intumescent formulation according to at least one of Claims 1 to 5, **characterized in that** the intumescent formulation contains between 20% by weight and 60% by weight of resin system.

7. Intumescent formulation according to at least one of Claims 1 to 6, **characterized in that** the resin system comprises between 5% by weight and 65% by weight of the first liquid polymer.

8. Intumescent formulation according to at least one of Claims 1 to 7, **characterized in that** the resin system comprises between 30% by weight and 90% by weight of vinylic monomers.

9. Intumescent formulation according to at least one of Claims 1 to 8, **characterized in that** the intumescent formulation contains between 35% and 60% by weight of the blowing agent.

10. Process for curing a liquid foaming intumescent formulation according to any of Claims 1 to 9, **characterized in that** an initiator or a component of an initiator system is added to the intumescent formulation, or that the curing coating composition is a 2C system and the two part-compositions of the 2C system are mixed together, then applied to a substrate within 20 min and cured within a further 120 min.

11. Process according to Claim 10, **characterized in that** the initiator, a component of the initiator system or a constituent in a component of a 2C system is an organic peroxide.

12. Process according to Claim 11, **characterized in that** the organic peroxide is a diacyl peroxide, a ketone peroxide, a peroxyester, a dialkyl peroxide, a hydroperoxide such as cumene hydroperoxide, a peroxyketal or a combination thereof.

13. Process according to at least one of Claims 10 to 12, **characterized in that** the intumescent formulation is cured in less than 60 minutes at a temperature of between 17°C and 23°C.

14. Process according to Claim 13, **characterized in that** the total loss of weight by evaporation in the intumescent formulation during mixing, application to the substrate, and curing is less than 5% by weight.

## Revendications

1. Formulation liquide, moussable, intumescente, comprenant un système de résine, **caractérisée en ce que** le système de résine présente au moins un premier polymère présentant un poids moléculaire moyen en masse Mₙ entre 1000 et 35.000 g/mole et une température de transition vitreuse inférieure à 15°C, au moins un monomère vinylique et au moins un composant qui fonctionne comme agent gonflant à une température supérieure à 200°C, un revêtement préparé à partir de la formulation intumescente étant durcissable par polymérisation et ne présentant, avant l'initiation de cette polymérisation, pas de composant pourvu d'une fonction acide et simultanément d'un poids moléculaire supérieur à 1500 g/mole.

2. Formulation intumescente selon la revendication 1, **caractérisée en ce que** le premier polymère présente une viscosité dynamique inférieure à 250.000 mPa.s et une fonctionnalité copolymérisable avec des monomères vinyliques.

3. Formulation intumescente selon la revendication 2, **caractérisée en ce qu'**il s'agit, pour le premier polymère, d'un (méth)acrylate d'uréthane liquide, d'un époxy(méth)acrylate liquide, d'un polyéther(méth)acrylate liquide, d'un polyester(méth)acrylate liquide ou de mélanges de ceux-ci, de préférence d'un (méth)acrylate d'uréthane liquide.

4. Formulation intumescente selon au moins l'une des revendications 1 à 3, **caractérisée en ce qu'**il s'agit, pour les monomères vinyliques dans le système de résine, d'un (méth)acrylate et/ou d'un mélange de différents (méth)acrylates et/ou de monomères copolymérisables avec des (méth)acrylates.

5. Formulation intumescente selon la revendication 4, **caractérisée en ce que** les monomères vinyliques sont choisis parmi le méthacrylate de (méthyle), le méthacrylate (d'éthyle), le (méth)acrylate de n-butyle, le (méth)acrylate d'isobutyle, le (méth)acrylate de t-butyle, le (méth)acrylate de 2-éthylhexyle, le styrène et les combinaisons de ces monomères.

6. Formulation intumescente selon au moins l'une des revendications 1 à 5, **caractérisée en ce que** la formulation intumescente contient entre 20% en poids et 60% en poids de système de résine.

7. Formulation intumescente selon au moins l'une des revendications 1 à 6, **caractérisée en ce que** le système de résine présente entre 5% en poids et 65% en poids du premier polymère liquide.

8. Formulation intumescente selon au moins l'une des revendications 1 à 7, **caractérisée en ce que** le système de résine présente entre 30% en poids et 90% en poids de monomères vinyliques.

9. Formulation intumescente selon au moins l'une des revendications 1 à 8, **caractérisée en ce que** la formulation intumescente contient entre 35 et 60% en poids de l'agent gonflant.

10. Procédé pour le durcissement d'une formulation liquide, moussante, intumescente selon l'une des revendications 1 à 9, **caractérisé en ce que** la formulation intumescente est additionnée d'un initiateur ou d'un composant d'un système initiateur ou **en ce qu'**il s'agit, pour la composition de revêtement durcissable, d'un système à 2 composants et les deux compositions partielles du système à 2 composants sont mélangées l'une avec l'autre, le système est ensuite appliqué dans les 20 minutes sur un substrat et il durcit ensuite en 120 minutes supplémentaires.

11. Procédé selon la revendication 10, caractérisé en ce qui il s'agit, pour l'initiateur, pour un composant du système initiateur ou pour un constituant dans un composant d'un système à 2 composants, d'un peroxyde organique.

12. Procédé selon la revendication 11, caractérisé en ce qui il s'agit, pour le peroxyde organique, d'un peroxyde de diacyle, d'un peroxyde de cétone, d'un peroxyester, d'un peroxyde de dialkyle, d'un hydroperoxyde, comme par exemple l'hydroperoxyde de cumène, d'un peroxycétal ou d'une combinaison de ceux-ci.

13. Procédé selon au moins l'une des revendications 10 à 12, **caractérisé en ce que** la formulation intumescente est durcie en moins de 60 minutes à une température entre 17°C et 23°C.

14. Procédé selon la revendication 13, **caractérisé en ce que**, pendant le mélange, l'application sur le substrat et le durcissement, la perte totale du poids de la formulation intumescente par évaporation est inférieure à 5% en poids.
